# EUROPÄISCHE PATENTANMELDUNG

(11) **EP 1 753 230 A2**
(43) Veröffentlichungstag der Anmeldung: **14.02.2007**
(21) Anmeldenummer: 06016124.7
(22) Anmeldetag: 02.08.2006
(51) Int. Cl.: H04N 5/44

(54) **Verfahren zum Übertragen eines Datenstroms von digitalen Bildern und digitale Bilderfassungseinheit**

(30) Priorität: 08.08.2005 DE 102005037282
(71) Anmelder: ARNOLD & RICHTER CINE TECHNIK GMBH & CO. BETRIEBS KG, 80799 München (DE)
(72) Erfinder: Krsljanin, Milan, Hook, Hampshire RG27 9RP (GB)
(74) Vertreter: Manitz, Finsterwald & Partner GbR

(57) **Zusammenfassung**

Es wird ein Verfahren zum Übertragen eines Datenstroms von durch eine digitale Bilderfassungseinheit mit einer ersten vorgegebenen Bildpunktanzahl erzeugten digitalen Vollbildern über eine Schnittstelle zu einer Bildaufzeichnungseinheit beschreiben, wobei die Schnittstelle zur Übertragung zumindest eines Datenstroms von digitalen Bildern mit einer zweiten, von der ersten Bildpunktanzahl verschiedenen Bildpunktanzahl und die Bildaufzeichnungseinheit zum Speichern von digitalen Bildern mit der zweiten Bildpunktanzahl ausgebildet sind und wobei die zweite Bildpunktanzahl geringer als die erste Bildpunktanzahl ist. Bei diesem Verfahren werden die mit der ersten Bildpunktanzahl erzeugten digitalen Vollbilder jeweils in zwei digitale Teilbilder aufgeteilt, wobei die Teilbilder jeweils eine zur Speicherung von Bildinformation genutzte Anzahl von Bildpunkten besitzen, die geringer oder gleich der zweiten Bildpunktanzahl ist, und wobei die in den zwei Teilbildern gespeicherte Bildinformation zusammen den gesamten Informationsgehalt des ursprünglichen Vollbildes enthält. Anschließend werden zwei Datenströme der digitalen Teilbilder erzeugt, wobei jeweils ein Teilbild eines digitalen Vollbildes dem ersten und das andere Teilbild des digitalen Vollbildes dem zweiten Datenstrom zugeordnet werden, die zwei Datenströme der digitalen Teilbilder über die Schnittstelle zu der Bildaufzeichnungseinheit übertragen werden und die übertragenen digitalen Teilbilder in der Bildaufzeichnungseinheit jeweils voneinander getrennt mit der zweiten Bildpunktanzahl gespeichert werden. Weiterhin wird eine entsprechende digitale Bilderfassungseinheit beschrieben.

## Beschreibung

Die vorliegende Erfindung betrifft ein Verfahren zum Übertragen eines Datenstroms von durch eine digitale Bilderfassungseinheit mit einer ersten vorgegebenen Bildpunktanzahl erzeugten digitalen Vollbildern über eine Schnittstelle zu einer Bildaufzeichnungseinheit. Weiterhin ist die Erfindung auf eine entsprechende digitale Bilderfassungseinheit gerichtet.

Um für die Filmproduktion digitale Bilder mit einem Seitenverhältnis von 2,35 : 1 (Cinemascope-Verfahren) erzeugen zu können, sind die heutzutage weit verbreiteten HD-(High Definition)Digital-Laufbildkameras nur unzureichend geeignet. Gemäß dem HD-Standard zeichnen diese Kameras ein Bildformat von 16 x 9 auf, so dass bei Verwendung von sphärischen Objektiven digitale Bilder mit einem Bildformat von 16 x 9 erzeugt werden, was einem Bildseitenverhältnis von 1,778 : 1 entspricht.

Diese Bilder können nur dadurch in das Cinemascope-Format umgesetzt werden, indem wesentliche horizontale Bildanteile an der oberen und unteren Seite des Bildes abgeschnitten werden. Dies ist jedoch mit einer unerwünschten Reduzierung der vertikalen Auflösung des resultierenden Bildes verbunden.

Während im Cinemascope-Verfahren üblicherweise so genannte anamorphotische Objektive mit einem Stauchungsverhältnis von 2 : 1 verwendet werden, um eine Szene mit dem Bildseitenverhältnis 2,35 : 1 auf einen 4 x 3-Sensor (bzw. bei analogen Verfahren auf einen 35 mm-Film) zusammenzustauchen, müssten für die Abbildung einer entsprechenden Szene auf einen HD-Sensor mit einem Bildformat von 16 x 9 so genannte halb-anamorphotische Optiken verwendet werden, die nicht dem gängigen Standard entsprechen und daher momentan nicht verfügbar sind. Neben den für die Entwicklung solcher Objektive erforderlichen Kosten würden mit einem solchen halb-anamorphotischen Objektiv aufgenommene Bilder einen anderen Eindruck erzeugen als mit üblichen anamorphotischen Objektiven aufgenommene Bilder, so dass die Akzeptanz solcher halb-anamorphotischen Objektive fraglich ist.

Da seit langer Zeit sowohl bei analogen wie auch zwischenzeitlich bei digitalen Aufnahmeverfahren die Aufnahme von Bildern im 4 x 3-Format, ggf. mit anamorphotischen Objektiven zur Erzeugung des Cinemascope-Formats, weit verbreitet sind, ist die weitere Verwendung von digitalen Laufbildkameras mit einem 4 x 3-Sensor und konventionellen anamorphotischen Linsen zur Aufnahme von Filmen im Cinemascope-Verfahren wünschenswert.

Da sich für die Speicherung und das Abspielen von digital codierten Filmen zwischenzeitlich das HD-Format mit einen Bildformat von 16 x 9 etabliert hat, sind auch die üblicherweise verfügbaren standardisierten Bildaufzeichnungseinheiten, beispielsweise in Form von Festplattenrecordern oder Bandaufzeichnungsgeräten, meist nur zur Aufzeichnung von Digitalbildern im 16 x 9-Format geeignet.

Ausgehend von einer identischen horizontalen Bildpunktanzahl von beispielsweise 1920 Pixel pro Bild sowohl für das 4 x 3-Format als auch für das 16 x 9-Format ergibt sich damit das Problem, wie die beim 4 x 3-Format vorhandene größere Datenmenge eines Digitalbildes von einem nach dem HD-Standard arbeitenden Aufzeichnungsgerät aufgezeichnet und gespeichert werden kann. Weiterhin stellt sich das Problem, dass gemäß dem HD-SDI-Standard (High Definition-Serial Digital Interface-Standard) nur Datenübertragungsraten möglich sind, mit denen keine im 4 x 3-Format aufgenommenen Vollbilder in Echtzeit (> 25 Bilder pro Sekunde) übertragen werden können.

Die gleichen Probleme bestehen, wenn man mit einem Filmscanner eingescannte Bilder eines üblicherweise in 35 mm (4 x 3-Format) vorliegenden Films ohne Qualitätsverlust, d.h. ohne verringerte Bildinformation, mit einem konventionellen HD-Recorder aufnehmen möchte.

Aufgabe der vorliegenden Erfindung ist es, ein Verfahren und eine Vorrichtung anzugeben, mit denen es möglich ist, mit einer ersten Bildpunktanzahl erzeugte digitale Vollbilder, insbesondere im 4 x 3-Format, bei voller Auflösung und ohne Verringerung der Bildqualität zu einer Bildaufzeichnungseinheit zu übertragen und in dieser zu speichern, wobei die Bildaufzeichnungseinheit lediglich zum Speichern von digitalen Bildern mit einer zweiten, gegenüber der ersten Bildpunktanzahl verringerten Bildpunktanzahl, insbesondere als konventionelles, HDkompatibles Aufnahmegerät ausgebildet ist.

Erfindungsgemäß wird diese Aufgabe gelöst durch ein Verfahren zum Übertragen eines Datenstroms von durch eine digitale Bilderfassungseinheit mit einer ersten vorgegebenen Bildpunktanzahl erzeugten digitalen Vollbildern über eine Schnittstelle zu einer Bildaufzeichnungseinheit, wobei die Schnittstelle zur Übertragung zumindest eines Datenstroms von digitalen Bildern mit einer zweiten, von der ersten Bildpunktanzahl verschiedenen Bildpunktanzahl und die Bildaufzeichnungseinheit zum Speichern von digitalen Bildern mit der zweiten Bildpunktanzahl ausgebildet sind und wobei die zweite Bildpunktanzahl geringer als die erste Bildpunktanzahl ist, bei dem die mit der ersten Bildpunktanzahl erzeugten digitalen Vollbilder jeweils in zwei digitale Teilbilder aufgeteilt werden, wobei die Teilbilder jeweils eine zur Speicherung von Bildinformation genutzte Anzahl von Bildpunkten besitzen, die geringer oder gleich der zweiten Bildpunktanzahl ist, und wobei die in den zwei Teilbildern gespeicherte Bildinformation zusammen den gesamten Informationsgehalt des ursprünglichen Vollbildes enthält, zwei Datenströme der digitalen Teilbilder erzeugt werden, wobei jeweils ein Teilbild eines digitalen Vollbildes dem ersten und das andere Teilbild des digitalen Vollbildes dem zweiten Datenstrom zugeordnet werden, die zwei Datenströme der digitalen Teilbilder über die Schnittstelle zu der Bildaufzeichnungseinheit übertragen werden und die übertragenen digitalen Teilbilder in der Bildaufzeichnungseinheit jeweils voneinander getrennt mit der zweiten Bildpunktanzahl gespeichert werden.

Eine erfindungsgemäße digitale Bilderfassungseinheit umfasst einen Sensor zur Erzeugung digitaler Vollbilder mit einer ersten vorgegebenen Bildpunktanzahl, eine Schnittstelle zum Übertragen zumindest eines Datenstroms von digitalen Bildern mit einer zweiten, von der ersten Bildpunktanzahl verschiedenen Bildpunktanzahl zu einer Bildaufzeichnungseinheit, wobei die zweite Bildpunktanzahl geringer als die erste Bildpunktanzahl ist, eine Bildaufteilungseinheit, die zum Aufteilen der erzeugten Vollbilder in jeweils zwei digitale Teilbilder ausgebildet ist, wobei die Teilbilder jeweils eine zur Speicherung von Bildinformation genutzte Anzahl von Bildpunkten besitzen, die geringer oder gleich der zweiten Bildpunktanzahl ist, und wobei die in den zwei Teilbildern gespeicherte Bildinformation zusammen zumindest den gesamten Informationsgehalt des ursprünglichen Vollbildes enthält, eine Datenstromerzeugungseinheit zur Erzeugung von zwei Datenströmen der digitalen Teilbilder, wobei jeweils ein Teilbild eines digitalen Vollbildes dem ersten und das andere Teilbild des digitalen Vollbildes dem zweiten Datenstrom zugeordnet ist, und eine Steuereinheit zum Steuern der Übertragung der beiden Datenströme der digitalen Teilbilder über die Schnittstelle zu der Bildaufzeichnungseinheit.

Gemäß der Erfindung werden somit die mit der ersten Bildpunktanzahl erzeugten Aufnahmebilder jeweils in zwei digitale Teilbilder aufgeteilt, deren für die Speicherung von Bildinformation tatsächlich genutzte Anzahl von Bildpunkten zumindest entlang der vertikalen oder der horizontalen Richtung geringer oder gleich der zweiten Bildpunktanzahl, d.h. derjenigen Bildpunktanzahl ist, mit welcher die Bilder in der Bildaufzeichnungseinheit gespeichert werden können. Dabei müssen also nicht sämtliche Bildpunkte der beiden Teilbilder zur Speicherung von Bildinformation aus dem Vollbild genutzt werden. Wichtig ist jedoch, dass die digitalen Vollbilder so in die zwei digitalen Teilbilder aufgeteilt werden, dass der gesamte Informationsgehalt des ursprünglichen Vollbildes in den beiden Teilbildern enthalten bleibt, so dass eine spätere Rekonstruktion des ursprünglichen Vollbildes ohne Qualitätsverlust und mit der ursprünglichen Auflösung möglich ist. Da übliche HD-kompatible Aufzeichnungsgeräte oft zwei HD-SDI kompatible Eingänge zum parallelen Aufnehmen zweier HD-SDI kompatibler Datenströme besitzen, können solche standardisierten Aufzeichnungsgeräte ohne Veränderung verwendet werden. Grundsätzlich ist es auch möglich, dass zwei voneinander getrennte Aufzeichnungsgeräte verwendet werden, von denen jeder einen der beiden Datenströme der digitalen Teilbilder aufnimmt. Hierbei ist es erforderlich, dass die beiden Aufzeichnungsgeräte bzw. die jeweiligen Datenströme miteinander synchronisiert sind, so dass eine genaue zeitliche Zuordnung der erzeugten Teilbilder gewährleistet ist.

Mit der Erfindung ist somit die Aufzeichnung von digitalen Vollbildern im 4 x 3-Format auf standardisierten HD-komptabilen Aufnahmegeräten ohne Qualitätsverlust und Verringerung der Auflösung möglich.

Ein besonderer Vorteil der Erfindung besteht darin, dass die genannte Aufteilung der Vollbilder (Aufnahmebilder) in die jeweils zwei Teilbilder derart erfolgen kann, dass eines der beiden Teilbilder als Nutzbild für eine Überprüfung der Bildinformation des Vollbilds und das andere Teilbild als Zusatzbild zur Bereitstellung der ergänzenden Bildinformation genutzt werden können. Mit anderen Worten kann das genannte Nutzbild ohne weitere Bearbeitung beispielsweise an einem 16 x 9-Monitor betrachtet werden, um hierdurch eine Erstkontrolle der Aufnahmebilder durchzuführen.

Unter der Bildpunktanzahl ist im Zusammenhang mit der Erfindung die Anzahl der Bildpunkte in vertikaler Richtung (= Zeilenzahl), oder die Anzahl der Bildpunkte in horizontaler Richtung (=Spaltenzahl), oder die Gesamtzahl der Bildpunkte des betreffenden Bildes zu verstehen.

Nach einer vorteilhaften Ausführungsform der Erfindung wird bei der Aufteilung des Datenstroms in die Teilbilder die Bildpunktanzahl der Teilbilder an die zweite Bildpunktanzahl - d.h. die Bildpunktanzahl der Bildaufzeichnungseinheit - angepasst, wenn die zur Speicherung von Bildinformation tatsächlich genutzte Anzahl von Bildpunkten der Teilbilder geringer als die zweite Bildpunktanzahl ist. Liegen die bei der Aufteilung des Datenstroms erzeugten Teilbilder bereits mit der zweiten Bildpunktanzahl vor, so ist eine entsprechende Anpassung nicht mehr erforderlich, da die Teilbilder in diesem Fall unverändert an die mit der zweiten Bildpunktanzahl arbeitende Bildaufzeichnungseinheit übertragen und in dieser gespeichert oder aufgezeichnet werden können. Eine Anpassung an die zweite Bildpunktanzahl kann beispielsweise dadurch erfolgen, dass an den oberen und unteren Rändern und/oder an den linken und rechten Rändern der digitalen Bilder "schwarze Streifen" erzeugt werden.

Nach einer weiteren bevorzugten Ausführungsform der Erfindung besitzen die aus einem digitalen Vollbild erzeugten digitalen Teilbilder dieselbe Bildpunktanzahl. Dadurch ist eine einfache Rekonstruktion der in der Bildaufzeichnungseinheit gespeicherten digitalen Teilbilder möglich.

Bevorzugt werden die digitalen Vollbilder mit der ersten Bildpunktanzahl in einem standardisierten 4 x 3-Format erzeugt. Abhängig von der Pixelzahl des verwendeten Sensors kann die erste Bildpunktanzahl beispielsweise 1920 x 1440 Pixel oder beispielsweise 2880 x 2160 Pixel betragen.

Vorteilhaft werden die digitalen Teilbilder in der Bildaufzeichnungseinheit in einem standardisierten 16 x 9-Format gespeichert. Liegen die digitalen Teilbilder bereits nach ihrer Erzeugung in 16 x 9-Format vor, so können die digitalen Teilbilder bereits in einem standardisierten 16 x 9-Format über die Schnittstelle zu der Bildaufzeichnungseinheit übertragen werden. Eine typische Auflösung für ein standardisiertes 16 x 9-Format ist das HD-Format mit 1920 x 1080 Pixel.

Nach einer weiteren vorteilhaften Ausführungsform der Erfindung weisen die digitalen Vollbilder mit der ersten Bildpunktanzahl eine vorgegebene Anzahl von Zeilen sowie eine vorgegebene Anzahl von Spalten auf, wobei beim Aufteilen der digitalen Vollbilder in die Teilbilder jeweils alle geradzahligen Zeilen des digitalen Vollbildes einem Teilbild des ersten Datenstroms und alle ungeradzahligen Zeilen des digitalen Vollbildes einem Teilbild des zweiten Datenstroms zugeordnet werden.

Diese spezielle Aufteilung der digitalen Vollbilder in jeweils zwei digitale Teilbilder hat den Vorteil, dass bei Aufzeichnung der Vollbilder unter Verwendung einer anamorphotischen Optik das Teilbild bei Betrachtung auf einem 16 x 9-Monitor als unverzerrtes 2,35 : 1-Bild innerhalb eines 16 x 9-Bildes erscheint (so genannte "letter box").

Bei einer weiteren bevorzugten Ausführungsform der Erfindung weisen die digitalen Vollbilder mit der ersten Bildpunktanzahl eine vorgegebene Anzahl von Zeilen sowie eine vorgegebene Anzahl von Spalten auf, wobei beim Aufteilen der digitalen Vollbilder in die Teilbilder jeweils eine vorgegebene Anzahl von Zeilen aus dem mittleren Bereich des digitalen Vollbildes einem Teilbild des ersten Datenstroms und die restlichen, oberen und unteren Zeilen des digitalen Vollbildes einem Teilbild des zweiten Datenstroms zugeordnet werden. Bevorzugt kann dabei als vorgegebene Anzahl der Zeilen aus dem mittleren Bereich die der zweiten Bildpunktanzahl entsprechende Zeilenanzahl verwendet werden. Weiterhin ist es vorteilhaft, wenn der mittlere Bereich des digitalen Vollbilds symmetrisch zur horizontalen Mittelachse des digitalen Vollbildes ausgewählt wird.

Bei dieser Aufteilung des digitalen Vollbildes in digitale Teilbilder wird bei Verwendung eines sphärischen Objektivs der mittlere Bereich des aufgenommenen Bildes so in dem jeweiligen ersten Teilbild gespeichert, dass die abgespeicherten ersten Teilbilder für sich allein zur Wiedergabe mit der zweiten Auflösung, beispielsweise im 16 x 9-Format, geeignet sind. Da üblicherweise in den oberen und unteren Bereichen des aufgenommenen Bildes keine wesentlichen Objekte enthalten sind, kann eine erfindungsgemäße digitale Bilderfassungseinheit in diesem Fall als "normale" HD-Laufbildkamera verwendet werden.

Mittels der in den zweiten Teilbildern abgespeicherten oberen und unteren Randstreifen besteht die Möglichkeit, bei Verwendung eines anamorphotischen Objektivs mit derselben Aufnahmeeinheit (Kamera) eine Erweiterung des Bildes auf das Cinemascope-Format vorzunehmen.

Bevorzugt werden dabei die restlichen, oberen und unteren Zeilen des digitalen Vollbildes dem Teilbild des zweiten Datenstroms so zugeordnet, dass sie auch die oberen bzw. die unteren Zeilen des digitalen Teilbildes bilden. Die zwischen den oberen und unteren Zeilen des zweiten digitalen Teilbildes liegenden, unbenutzten Pixel können ausgeblendet oder mit "schwarz" belegt werden.

Nach einer weiteren vorteilhaften Ausführungsform der Erfindung weisen die digitalen Vollbilder mit der ersten Bildpunktanzahl eine vorgegebene Anzahl von Zeilen sowie eine vorgegebene Anzahl von Spalten auf, wobei beim Aufteilen der digitalen Vollbilder in die Teilbilder jeweils eine vorgegebene Anzahl von Zeilen aus dem oberen Bereich des digitalen Vollbildes einem Teilbild des ersten Datenstroms und die restlichen, unteren Zeilen des digitalen Vollbildes einem Teilbild des zweiten Datenstroms zugeordnet werden.

Je nach Anwendungsfall wird vorteilhaft zur Erzeugung der digitalen Vollbilder ein sphärisches Objektiv oder ein anamorphotisches Objektiv, insbesondere mit einem Verzerrungsfaktor von 2 : 1, verwendet.

Die digitale Bilderfassungseinheit kann beispielsweise als digitale Laufbildkamera oder auch als Filmscanner ausgebildet sein. Vorteilhaft ist die Schnittstelle nach dem HD-SDI-Standard ausgebildet, um einen unproblematischen Anschluss an mit dem HD-SDI-Standard kompatiblen Aufzeichnungsgeräten zu ermöglichen.

Die Erfindung wird nachfolgend anhand von Ausführungsbeispielen unter Bezugnahme auf die Zeichnungen näher erläutert, in diesen zeigen:
- Fig. 1: eine schematische Darstellung der Aufteilung eines digitalen Vollbilds in zwei digitale Teilbilder gemäß einer ersten Ausführungsform der Erfindung,
- Fig. 2 bis 4: drei weitere Ausführungsformen zum Aufteilen eines digitalen Vollbildes in zwei digitale Teilbilder,
- Fig. 5: eine schematische Darstellung einer erfindungsgemäß ausgebildeten digitalen Bilderfassungseinheit mit zwei verschiedenen Bildaufzeichnungseinheiten und
- Fig. 6: eine weitere Ausführungsform einer erfindungsgemäßen ausgebildeten digitalen Bilderfassungseinheit.

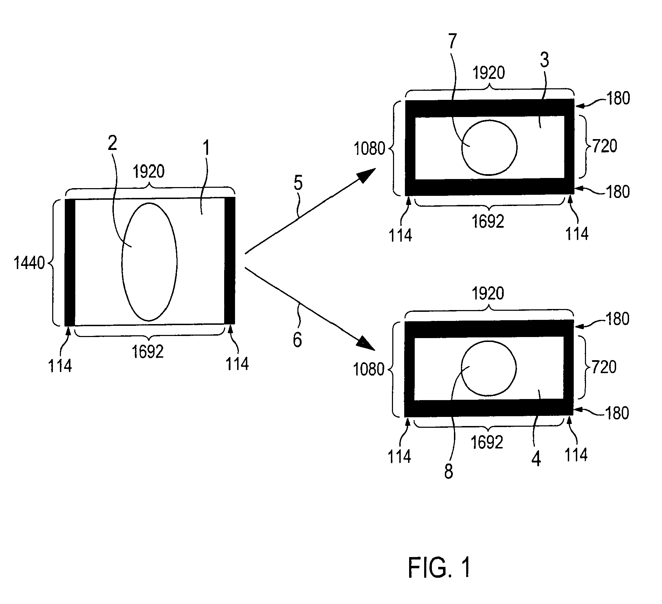

Fig. 1 zeigt ein digitales Vollbild 1, wie es beispielsweise bei Anwendung des Cinemascope-Verfahrens unter Verwendung eines anamorphotischen Objektivs und eines Sensors mit 1920 x 1440 Pixeln erzeugt wird. Durch das anamorphotische Objektiv wird das ursprünglich kreisförmige Objekt durch Ausdehnung in vertikaler Richtung zu einem Oval 2 verzerrt.

Bei Verwendung eines anamorphotischen Objektivs mit dem Verzerrungsfaktor 2 : 1 wird das im Cinemascope-Format von 2,35 : 1 aufzunehmende Bild in ein digitales Vollbild mit 1692 x 1440 Bildpunkten abgebildet, so dass an dem rechten und dem linken Rand der Sensorfläche jeweils unbenutzte senkrechte Streifen mit einer Breite von 114 Bildpunkten verbleiben. Die entsprechenden Bildpunkte werden entweder nicht ausgelesen oder können beispielsweise mit "schwarz" belegt werden, so dass in dem digitalen Vollbild 1 zwei senkrechte schwarze Balken entstehen.

Erfindungsgemäß werden die entsprechend aufgenommenen digitalen Vollbilder 1 in zwei digitale Teilbilder 3, 4 aufgeteilt, wie es durch Pfeile 5, 6 angedeutet ist.

Die Aufteilung erfolgt gemäß Fig. 1 dabei in der Weise, dass dem digitalen Teilbild 3 jeweils die auf den geradzahligen Bildzeilen des digitalen Vollbilds 1 liegenden Bildpunkte zugeordnet werden, während dem digitalen Teilbild 4 jeweils die Bildpunkte der ungeradzahligen Bildzeilen des digitalen Vollbilds 1 zugeordnet werden.

Bei einer Zeilenzahl von insgesamt 1440 Zeilen des digitalen Vollbilds 1 werden jedem der beiden Teilbilder 3, 4 somit 720 Bildzeilen zugeordnet, wie es aus Fig. 1 ersichtlich ist. Da das aufgenommene Bild ursprünglich mit einem anamorphotischen Objektiv mit dem Verzerrungsverhältnis 2 : 1 aufgenommen wurde, wird bei dieser Aufteilung (Halbierung der Zeilenzahl) das aufgenommene Objekt wieder in seiner ursprünglichen Form, als Kreis 7 bzw. 8 dargestellt.

Da die Teilbilder mit einer Höhe von 720 Bildzeilen das HD-Bildformat mit einer Höhe von 1080 Bildzeilen nicht vollständig ausfüllen, sind an den oberen sowie an den unteren Rändern der Teilbilder 3, 4 horizontal verlaufende schwarze Balken mit einer Höhe von jeweils 180 Bildzeilen vorhanden.

Die auf diese Weise erzeugten Teilbilder 3, 4 besitzen somit eine HDkonforme Auflösung von 1920 x 1080 und können in zwei getrennten Datenströmen zusammen mit jeweils folgenden Teilbildern 3, 4 über eine HD-SDI-konforme Standardschnittstelle zu einem HD-kompatiblem Aufzeichnungsgerät übertragen und dort im Standard HD-Format separat gespeichert werden.

Wie aus Fig. 1 zu erkennen ist, kann jedes der Teilbilder 3, 4 ohne weitere Bearbeitung über ein übliches 16 x 9-Display, mit halber vertikaler Auflösung, jedoch mit voller horizontaler Auflösung, unverzerrt dargestellt werden. Anhand eines einzelnen Datenstroms können somit bereits während der Produktion die aufgenommenen Szenen in einfacher Weise überprüft werden, ohne dass eine aufwändige Rekombination der Bilder im 2,35 : 1-Format erforderlich wäre. Diese Rekombination kann somit auf die endgültige Post-Produktion verschoben werden.

Grundsätzlich ist es bei diesem wie auch bei allen weiteren Ausführungsbeispielen möglich, dass die gesamte Breite von 1920 Pixeln des Aufnahmesensors verwendet wird, was in einem Bildseitenverhältnis von 2,667 : 1 bei Verwendung eines anamorphotischen Objektivs mit einem Verzerrungsfaktor von 2 : 1 resultiert. In diesem Fall haben die Teilbilder der beiden Datenströme jeweils eine effektive Auflösung von 1920 x 720 Pixel (zur Speicherung von Bildinformation tatsächlich genutzte Bildpunkte). Die standardisierte Auflösung von 1692 x 720 Bildpunkten bzw. des rekombinierten gestauchten Bildes von 1692 x 1440 Bildpunkten kann dann in der Post-Produktion hergestellt werden.

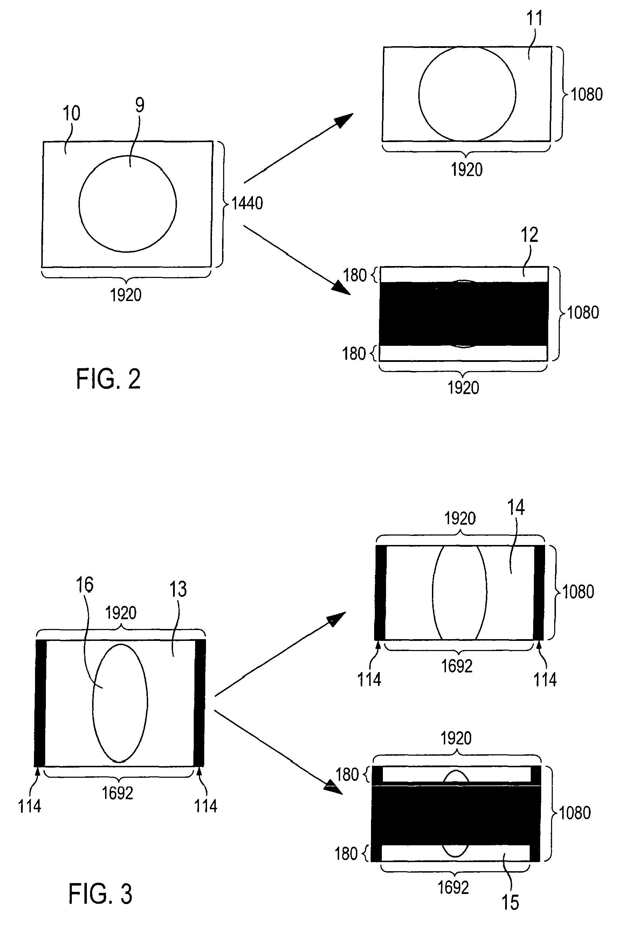

In dem Beispiel nach Fig. 2 wurde das Bild mit einem sphärischen Objektiv aufgenommen, so dass das aufgenommene Objektiv unverzerrt als Kreis 9 in dem digitalen Vollbild 10 dargestellt ist. Dies ist beispielsweise dann sinnvoll, wenn es sich um eine Fernsehaufnahme handelt, bei der die Wiedergabe im 4 x 3-Format erfolgt. Das digitale Vollbild 10 ist in diesem Fall frei von schwarzen vertikalen oder horizontalen Balken.

Gemäß Fig. 2 erfolgt die Aufteilung des digitalen Vollbildes 10 so, dass 1080 mittig angeordnete horizontale Bildzeilen dem ersten digitalen Teilbild 11 und die verbleibenden jeweils 180 horizontalen Bildzeilen am oberen bzw. unteren Rand des digitalen Vollbilds 10 dem zweiten digitalen Teilbild 12 zugeordnet werden. Dabei werden jeweils die aus dem digitalen Vollbild 10 entnommenen oberen 180 horizontalen Bildzeilen auch in dem digitalen Teilbild 12 an dem oberen Rand und die ursprünglich unteren 180 horizontalen Bildzeilen in dem digitalen Teilbild 12 ebenfalls am unteren Rand angeordnet, so dass im mittleren Bereich des digitalen Teilbilds 12 ein unbenutzter, schwarzer Bereich entsteht.

Vorteilhaft an dieser Aufteilung ist, dass das erste digitale Teilbild 11 den wesentlichen Teil des digitalen Vollbilds 10 im standardisierten 16 x 9-Format enthält und daher die Teilbilder 11 ohne weitere Bearbeitung an einem 16 x 9-Monitor betrachtet werden können. Durch die zweiten digitalen Teilbilder 12 können nach entsprechender Rekombination der Teilbilder 11 mit den jeweiligen Teilbildern 12 wiederum die digitalen Vollbilder 10 ohne Qualitätsverlust hergestellt und im 4 x 3-Format dargestellt werden.

Fig. 3 zeigt die gleiche Aufteilung eines digitalen Vollbildes 13 in zwei digitale Teilbilder 14, 15 wie in Fig. 2. Im Unterschied zu Fig. 2 wurde jedoch das digitale Vollbild 13 mit einem anamorphotischen Objektiv aufgenommen, so dass die bereits in Fig. 1 dargestellte verzerrte Aufnahme des Objekts 16 erfolgt. Bei dieser Aufteilung mit dem anamorphotischen Aufnahmeverfahren kann nach Rekombination der beiden im 16 x 9-Format gespeicherten Teilbilder 14, 15 das ursprüngliche digitale Vollbild 13 im Format 2,35 : 1 mit voller Auflösung und ohne Qualitätsverlust wiederhergestellt werden.

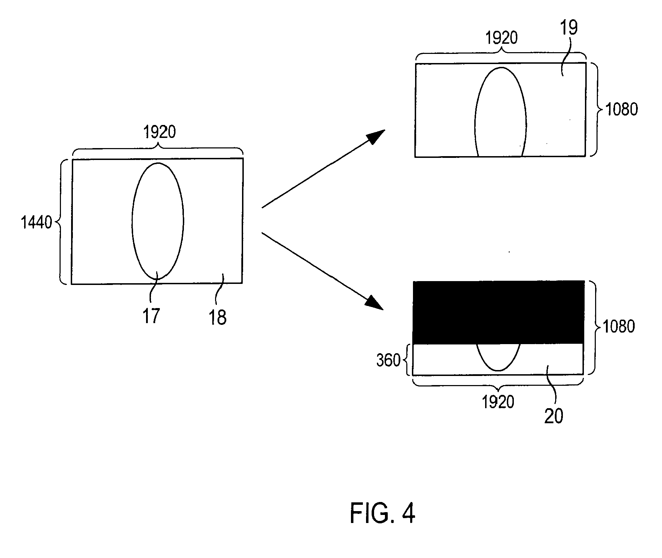

Gleiches gilt auch für die Aufteilung gemäß Fig. 4, bei der bei einer Aufnahme des Objekts 17 mit einem anamorphotischen Objektiv ein digitales Vollbild 18 so auf zwei digitale Teilbilder 19, 20 aufgeteilt wird, dass die 1080 oberen horizontalen Bildzeilen dem ersten digitalen Teilbild 19 und die verbleibenden am unteren Rand gelegenen 360 horizontalen Bildzeilen dem zweiten digitalen Teilbild 20 zugeordnet werden.

Die Erfindung erweist sich nicht nur dann als vorteilhaft, wenn - wie in Fig. 1 bis 4 gezeigt - die Gesamt-Bildpunktanzahl der Teilbilder 3, 4, 11, 12, 14, 15, 19, 20 geringer als die Gesamt-Bildpunktanzahl des jeweiligen Vollbilds 1, 10, 13 bzw. 18 ist. Der erläuterte Vorteil der Qualitätserhaltung wird auch dann erreicht, wenn die Bildpunktanzahl der Teilbilder lediglich entlang der vertikalen oder der horizontalen Richtung geringer ist als bei dem Vollbild, wie dies beispielsweise bei einer Konvertierung von einem 4 x 3 zu einem 16 x 9 Format auftreten kann.

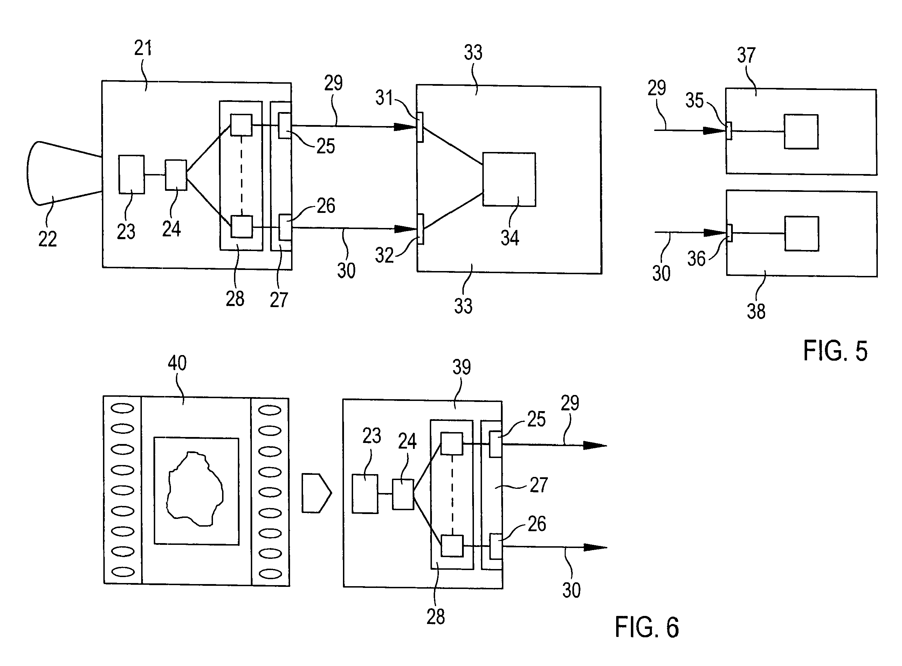

In Fig. 5 ist schematisch eine erfindungsgemäß ausgebildete digitale Bilderfassungseinheit 21 dargestellt, die als digitale Laufbildkamera ausgebildet ist. Die Bilderfassungseinheit 21 umfasst ein Objektiv 22, das je nach Anwendungsfall sphärisch oder anamorphotisch ausgebildet ist, sowie einen Sensor 23, der bevorzugt ein Format von 4 x 3 besitzt.

Der Sensor 23 ist mit seinem Ausgang mit einer Bildaufteilungseinheit 24 verbunden, durch die die vom Sensor 23 erzeugten digitalen Vollbilder in jeweils zwei digitale Teilbilder aufgeteilt und nacheinander zur Erzeugung eines Datenstroms ausgegeben werden, so dass die Bildaufteilungseinheit 24 gleichzeitig eine Datenstromerzeugungseinheit bildet. Die auf diese Weise erzeugten zwei Datenströme von digitalen Teilbildern werden zu zwei insbesondere HD-SDI-kompatiblen Ausgängen 25, 26 einer Schnittstelle 27 übertragen, wobei die Übertragung der beiden Datenströme der digitalen Teilbilder über eine Steuereinheit 28 gesteuert wird.

Die beiden digitalen Datenströme werden über Datenkabel 29, 30 zu HD-SDI-konformen Eingängen 31, 32 eines HD-Recorders 33 übertragen, der zur gleichzeitigen Aufnahme von zwei parallelen Datenströmen von digitalen Teilbildern, insbesondere im 16 x 9-Format fähig ist.

Der HD-Recorder kann dabei die digitalen Teilbilder beispielsweise auf einer Festplatte 34 oder einem sonstigen geeigneten Medium, wie beispielsweise einem Magnetband oder einer optischen Disk aufzeichnen.

Alternativ ist in Fig. 5 im rechten Bereich dargestellt, dass die Datenströme über die Datenleitungen 29, 30 auch an zwei jeweils nur mit einem Eingang 35, 36 versehene HD-Recorder 37, 38 zur Aufnahme geleitet werden können.

In Fig. 6 ist dargestellt, dass anstelle einer digitalen Laufbildkamera ein Filmscanner 39 zur Erzeugung der digitalen Vollbilder und anschließenden Umsetzung in zwei Datenströme von digitalen Teilbildern verwendet werden kann. Mit dem Filmscanner 39 kann beispielsweise ein im 35 mm Format vorliegender Film gescannt und in einen Datenstrom von digitalen Vollbildern umgesetzt werden, die wiederum in zwei Datenströme von digitalen Teilbildern aufgeteilt werden, wie es bereits beschrieben wurde. Sämtliche weiteren Verfahrensschritte sind identisch zu den Schritten bei Verwendung einer Laufbildkamera.

### Bezugszeichenliste

- 1: digitales Vollbild
- 2: Oval
- 3: digitales Teilbild
- 4: digitales Teilbild
- 5: Pfeil
- 6: Pfeil
- 7: Kreis
- 8: Kreis
- 9: Kreis
- 10: digitales Vollbild
- 11: digitales Teilbild
- 12: digitales Teilbild
- 13: digitales Vollbild
- 14: digitales Teilbild
- 15: digitales Teilbild
- 16: Objekt
- 17: Oval
- 18: digitales Vollbild
- 19: digitales Teilbild
- 20: digitales Teilbild
- 21: digitale Bilderfassungseinheit
- 22: Objektiv
- 23: Sensor
- 24: Bildaufteilungseinheit
- 25: Ausgang
- 26: Ausgang
- 27: Schnittstelle
- 28: Steuereinheit
- 29: Datenleitung
- 30: Datenleitung
- 31: Eingang
- 32: Eingang
- 33: HD-Recorder
- 34: Festplatte
- 35: Eingang
- 36: Eingang
- 37: HD-Recorder
- 38: HD-Recorder
- 39: Filmscanner
- 40: Film

## Patentansprüche

1. Verfahren zum Übertragen eines Datenstroms von durch eine digitale Bilderfassungseinheit (21, 39) mit einer ersten vorgegebenen Bildpunktanzahl erzeugten digitalen Vollbildern (1; 10; 13; 18) über eine Schnittstelle (27) zu einer Bildaufzeichnungseinheit (33, 37, 38), wobei die Schnittstelle (27) zur Übertragung zumindest eines Datenstroms von digitalen Bildern mit einer zweiten, von der ersten Bildpunktanzahl verschiedenen Bildpunktanzahl und die Bildaufzeichnungseinheit (33, 37, 38) zum Speichern von digitalen Bildern mit der zweiten Bildpunktanzahl ausgebildet sind und wobei die
zweite Bildpunktanzahl geringer als die erste Bildpunktanzahl ist, bei dem die mit der ersten Bildpunktanzahl erzeugten digitalen Vollbilder (1; 10; 13; 18) jeweils in zwei digitale Teilbilder (3, 4; 11, 12; 14, 15; 19, 20) aufgeteilt werden, wobei die Teilbilder (3, 4; 11, 12; 14, 15; 19, 20) jeweils eine zur Speicherung von Bildinformation genutzte Anzahl von Bildpunkten besitzen, die geringer oder gleich der zweiten Bildpunktanzahl ist, und wobei die in den zwei Teilbildern (3, 4; 11, 12; 14, 15; 19, 20) gespeicherte Bildinformation zusammen den gesamten Informationsgehalt des ursprünglichen Vollbildes (1; 10; 13; 18) enthält,
zwei Datenströme der digitalen Teilbilder (3, 4; 11, 12; 14, 15; 19, 20) erzeugt werden, wobei jeweils ein Teilbild (3; 11; 14; 19) eines digitalen Vollbildes (1; 10; 13; 18) dem ersten und das andere Teilbild (4; 12; 15; 20) des digitalen Vollbildes (1; 10; 13; 18) dem zweiten Datenstrom zugeordnet werden,
die zwei Datenströme der digitalen Teilbilder (3, 4; 11, 12; 14, 15; 19, 20) über die Schnittstelle zu der Bildaufzeichnungseinheit (33, 37, 38) übertragen werden und
die übertragenen digitalen Teilbilder (3, 4; 11, 12; 14, 15; 19, 20) in der Bildaufzeichnungseinheit (33, 37, 38) jeweils voneinander getrennt mit der zweiten Bildpunktanzahl gespeichert werden.

2. Verfahren nach Anspruch 1,
**dadurch gekennzeichnet,**
**dass** die Bildpunktanzahl der Teilbilder (3, 4; 11, 12; 14, 15; 19, 20) vor der Übertragung an die zweite Bildpunktanzahl angepasst wird, wenn die zur Speicherung von Bildinformation genutzte Anzahl von Bildpunkten der bei der Aufteilung des Datenstroms erzeugten Teilbilder (3, 4; 11, 12; 14, 15; 19, 20) geringer als die zweite Bildpunktanzahl ist.

3. Verfahren nach Anspruch 1 oder 2,
**dadurch gekennzeichnet,**
**dass** die aus einem digitalen Vollbild (1; 10; 13; 18) erzeugten digitalen Teilbilder (3, 4; 11, 12; 14, 15; 19, 20) die gleiche Bildpunktanzahl besitzen.

4. Verfahren nach einem der vorhergehenden Ansprüche,
**dadurch gekennzeichnet,**
**dass** die digitalen Vollbilder (1; 10; 13; 18) mit der ersten Bildpunktanzahl in einem standardisierten 4x3-Format erzeugt werden.

5. Verfahren nach einem der vorhergehenden Ansprüche,
**dadurch gekennzeichnet,**
**dass** die digitalen Teilbilder (3, 4; 11, 12; 14, 15; 19, 20) in der Bildaufzeichnungseinheit (33, 37, 38) in einem standardisierten 16x9-Format gespeichert werden.

6. Verfahren nach einem der vorhergehenden Ansprüche,
**dadurch gekennzeichnet,**
**dass** die digitalen Teilbilder (3, 4; 11, 12; 14, 15; 19, 20) in einem standardisierten 16x9-Format über die Schnittstelle (27) übertragen werden.

7. Verfahren nach einem der vorhergehenden Ansprüche,
**dadurch gekennzeichnet,**
**dass** die digitalen Vollbilder (1) mit der ersten Bildpunktanzahl eine vorgegebene Anzahl von Zeilen sowie eine vorgegebene Anzahl von Spalten aufweisen und dass beim Aufteilen der digitalen Vollbilder (1) in die Teilbilder (3, 4) jeweils alle geradzahlige Zeilen des digitalen Vollbildes (1) einem Teilbild (3) des ersten Datenstroms und alle ungeradzahligen Zeilen des digitalen Vollbildes (1) einem Teilbild (4) des zweiten Datenstroms zugeordnet werden.

8. Verfahren nach einem der Ansprüche 1 bis 6,
**dadurch gekennzeichnet,**
**dass** die digitalen Vollbilder (10; 13) mit der ersten Bildpunktanzahl eine vorgegebene Anzahl von Zeilen sowie eine vorgegebene Anzahl von Spalten aufweisen und dass beim Aufteilen der digitalen Vollbilder (10; 13) in die Teilbilder (11, 12; 14, 15) jeweils eine vorgegebene Anzahl von Zeilen aus einem mittleren Bereich des digitalen Vollbildes (10;13) einem Teilbild (11; 14) des ersten Datenstroms und die restlichen, oberen und unteren Zeilen des digitalen Vollbildes (10; 13) einem Teilbild (12; 15) des zweiten Datenstroms zugeordnet werden.

9. Verfahren nach Anspruch 8,
**dadurch gekennzeichnet,**
**dass** als vorgegebene Anzahl der Zeilen aus dem mittleren Bereich des digitalen Vollbildes die Zeilenanzahl der zweiten Bildpunktanzahl verwendet wird.

10. Verfahren nach Anspruch 8 oder 9,
**dadurch gekennzeichnet,**
**dass** der mittlere Bereich des digitalen Vollbildes (10; 13) symmetrisch zur horizontalen Mittelachse des digitalen Vollbildes (10; 13) ausgewählt wird.

11. Verfahren nach einem der Ansprüche 8 bis 10,
**dadurch gekennzeichnet,**
**dass** die restlichen, oberen und unteren Zeilen des digitalen Vollbildes (10; 13) dem Teilbild (12; 15) des zweiten Datenstroms so zugeordnet werden, dass sie auch die oberen bzw. die unteren Zeilen des digitalen Teilbildes (12; 15) bilden.

12. Verfahren nach einem der Ansprüche 1 bis 6,
**dadurch gekennzeichnet,**
**dass** die digitalen Vollbilder (18) mit der ersten Bildpunktanzahl eine vorgegebene Anzahl von Zeilen sowie eine vorgegebene Anzahl von Spalten aufweisen und dass beim Aufteilen der digitalen Vollbilder (18) in die Teilbilder (19, 20) jeweils eine vorgegebene Anzahl von Zeilen aus dem oberen Bereich des digitalen Vollbildes (18) einem Teilbild (19) des ersten Datenstroms und die restlichen, unteren Zeilen des digitalen Vollbildes (18) einem Teilbild (20) des zweiten Datenstroms zugeordnet werden.

13. Verfahren nach einem der vorhergehenden Ansprüche,
**dadurch gekennzeichnet,**
**dass** zur Erzeugung der digitalen Vollbilder (10) ein sphärisches Objektiv verwendet wird.

14. Verfahren nach einem der Ansprüche 1 bis 12,
**dadurch gekennzeichnet,**
**dass** zur Erzeugung der digitalen Vollbilder (1; 13; 18) ein anamorphotisches Objektiv, insbesondere mit einem Verzerrungsfaktor von 2:1, verwendet wird.

15. Verfahren nach einem der vorhergehenden Ansprüche,
**dadurch gekennzeichnet,**
**dass** die Datenströme der digitalen Teilbilder (3, 4; 11, 12; 14, 15; 19, 20) parallel, insbesondere synchronisiert zueinander, über zwei Datenleitungen (29, 30) von der Bilderfassungseinheit (21, 39) zu der Bildaufzeichnungseinheit (33, 37, 38) übertragen werden.

16. Digitale Bilderfassungseinheit mit einem Sensor (23) zur Erzeugung digitaler Vollbilder (1; 10; 13; 18) mit einer ersten vorgegebenen Bildpunktanzahl, mit einer Schnittstelle (27) zum Übertragen zumindest eines Datenstroms von digitalen Bildern mit einer zweiten, von der ersten Bildpunktanzahl verschiedenen Bildpunktanzahl zu einer Bildaufzeichnungseinheit (33, 37, 38), wobei die zweite Bildpunktanzahl geringer als die erste Bildpunktanzahl ist,
mit einer Bildaufteilungseinheit (24), die zum Aufteilen der erzeugten Vollbilder (1; 10; 13; 18) in jeweils zwei digitale Teilbilder (3, 4; 11, 12; 14, 15; 19, 20) ausgebildet ist, wobei die Teilbilder (3, 4; 11, 12; 14, 15; 19, 20) jeweils eine zur Speicherung von Bildinformation genutzte Anzahl von Bildpunkten besitzen, die geringer oder gleich der zweiten Bildpunktanzahl ist, und wobei die in den zwei Teilbildern (3, 4; 11, 12; 14, 15; 19, 20) gespeicherte Bildinformation zusammen den gesamten Informationsgehalt des ursprünglichen Vollbildes (1; 10; 13; 18) enthält,
mit einer Datenstromerzeugungseinheit (24) zur Erzeugung von zwei Datenströmen der digitalen Teilbilder (3, 4; 11, 12; 14, 15; 19, 20), wobei jeweils ein Teilbild (3; 11; 14; 19) eines digitalen Vollbildes (1; 10; 13; 18) dem ersten und das andere Teilbild (4; 12; 15; 20) des digitalen Vollbildes (1; 10; 13; 18) dem zweiten Datenstrom zugeordnet ist, und
mit einer Steuereinheit zum Steuern der Übertragung der beiden Datenströme der digitalen Teilbilder (3, 4; 11, 12; 14, 15; 19, 20) über die Schnittstelle (27) zu der Bildaufzeichnungseinheit (33, 37, 38).

17. Digitale Bilderfassungseinheit nach Anspruch 16,
**dadurch gekennzeichnet,**
**dass** die digitale Bilderfassungseinheit eine digitale Laufbildkamera (21) ist.

18. Digitale Bilderfassungseinheit nach Anspruch 16,
**dadurch gekennzeichnet,**
**dass** die digitale Bilderfassungseinheit ein Filmscanner (39) ist.

19. Digitale Bilderfassungseinheit nach einem der Ansprüche 16 bis 18,
**dadurch gekennzeichnet,**
**dass** die Schnittstelle (27) nach dem HD-SDI (High Definition - Serial Digital Interface) Standard ausgebildet ist.

20. Digitale Bilderfassungseinheit nach einem der Ansprüche 16 bis 19,
**dadurch gekennzeichnet,**
**dass** der Sensor (23) ein Bildformat von 4x3 besitzt.
